# EUROPÄISCHE PATENTSCHRIFT

(11) **EP 1 262 669 B1**
(45) Veröffentlichungstag und Bekanntmachung des Hinweises auf die Patenterteilung: **09.03.2005**
(21) Anmeldenummer: 01113284.2
(22) Anmeldetag: 31.05.2001
(51) Int. Cl.: F16B 25/10, F16B 25/00

(54) **Spanlos loch- und gewindeformende Schraube**
Self-piercing screw with no formation of chips
Vis autopoinçonneur sans formation de copeaux métalliques

(43) Veröffentlichungstag der Anmeldung: 04.12.2002
(73) Patentinhaber: Hans Schriever GmbH & Co, 58513 Lüdenscheid (DE)
(72) Erfinder: Güven, Ali-H., c/o Hans Schriever GmbH & Co., 58513 Lüdenscheid (DE)
(74) Vertreter: Körber, Wolfhart, Dr.

(56) Entgegenhaltungen:
- DE-A- 19 637 969
- DE-C- 3 909 725
- GB-A- 1 022 355
- US-A- 4 068 554

## Beschreibung

Die Erfindung betrifft eine spanlos loch- und gewindeformende Schraube zur Verschraubung in Feinblechen geringer Dicke, aufweisend einen Kopf, der für einen Werkzeugangriff ausgebildet ist, einen an den Kopf anschließenden, ein Schraubengewinde tragenden, im wesentlichen zylindrischen ersten Abschnitt, einen an den ersten Abschnitt anschließenden, sich konisch verjüngenden, gewindeformenden zweiten Abschnitt, und einen sich an den zweiten Abschnitt anschließenden, sich im wesentlichen konisch verjüngenden und eine Spitze bildenden dritten Abschnitt, wobei an dem ersten und zweiten Abschnitt der Schraube ein durchlaufendes erstes Gewinde konstanter Steigung ausgebildet ist, der zweite Abschnitt eine im wesentlichen polygonale Querschnittsform aufweist, und an dem dritten Abschnitt ein Bohrgewinde ausgebildet ist.

Insbesondere in der Automobilindustrie besteht ein steigender Bedarf nach spanlos loch- und gewindeformenden Schrauben zur Verschraubung in Feinblechen geringer Dicke. Die zu verarbeitenden Feinbleche weisen in Abhängigkeit von dem verwendeten Material üblicherweise eine Materialstärke (Dicke) bis maximal 2 mm, vorzugsweise bis 1,5 mm, auf.
Der entscheidende Vorteil von spanlos loch- und gewindeformenden Schrauben ist darin zu sehen, dass derartige Schrauben ohne Vorarbeit direkt in ein Feinblech eingebracht werden können, da sie sich selbst ein Loch bohren und in dieses Loch ein Gewinde einbringen.
Ein Vorbohren / Vorformen eines Loch oder eine andere Vorbearbeitung des Bleches ist somit bei Verwendung derartiger Schrauben nicht mehr nötig, wodurch ein Arbeitsschritt eingespart werden kann.
Weiter werden so in der Produktion zusätzliche Toleranzspielräume geschaffen, da ein zu verschraubendes Element lediglich auf das Feinblech gelegt und nicht mehr genau (beispielsweise auf ein vorgebohrtes Loch hin) ausgerichtet werden muß.
Aufgrund der unzähligen Ausstattungsvarianten ist es gerade im Automobilbau wünschenswert, ausgehend von einer möglichst einfachen Rohkarosse, die keine überzähligen vorgebohrten Löcher aufweisen darf, durch nachträgliches Aufschrauben von Zusatzteilen die gewünschte Modellvielfalt zu realisieren.

Aus der DE 196 37 969 ist eine typische spanlos loch- und gewindeformende Dünnblechschraube mit einem Gewindedurchmesser von höchstens 6 mm, bevorzugt ca. 3 mm bis 6 mm, zur Verschraubung in Feinblechen unter 1,5 mm Dicke, (vorzugsweise unter 1 mm Dicke) bekannt.

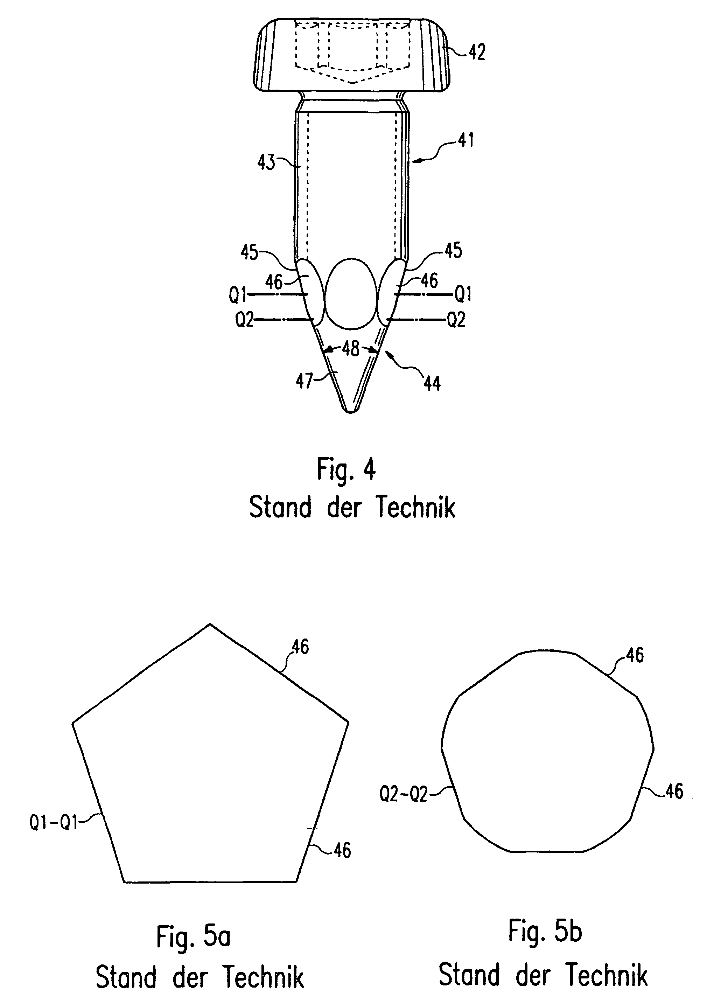

Eine derartige Schraube ist in den Figs. 4 und 5 gezeigt und wird nachfolgend näher beschrieben. Dabei zeigen Figs. 5a, 5b nicht maßstabsgetreue Querschnitte durch die Schraube entlang den Schnittlinien Q1-Q1 bzw. Q2-Q2.

Die in Fig. 4 dargestellte Schraube 41 weist einen Kopf 42 mit einem Werkzeugangriff und einem daran anschließenden Gewindeschaft 43 auf, der in einer konischen Verjüngung 44 ausläuft, wobei ein an den im wesentlichen zylindrischen Gewindeschaft 43 anschließender erster Bereich 45 der Verjüngung 44 eine polygonale Querschnittsform, insbesondere in Form eines dreiseitigen oder fünfseitigen Pyramidenstumpfes, die durch Abflachungen 46 gebildet ist, aufweist, das Gewinde der Schraube 41 als von der Spitze eines Kegels bis zum kopfseitigen Schaftende des Gewindeschaftes 43 durchlaufendes, metrisches Spitzgewinde konstanter Steigung geformt ist, und zum Zwecke der Direktverschraubung ein an den polygonalen Querschnitt anschließender zweiter Bereich 47 als Spitzkegel geformt ist, wobei der Kegelwinkel 48 des ersten und zweiten Bereiches etwa 60° beträgt.

Aufgrund ihrer kegelartigen Spitze im zweiten Bereich 47 der Verjüngung 44 erlaubt die in den Figs. 4, 5 gezeigte bekannte Schraube 41 eine spanlose Lochformung in Dünnblechen, da das Material beim Einbohren der Schraube zunächst von der Spitze aufgerissen und dann radial nach außen gedrängt wird. Es entsteht ein Loch mit einer das Loch umgebenden wulstförmigen Materialverdickung.
Anschließend wird mittels eines im ersten Bereich 45 der Verjüngung 44 der Dünnblechschraube 41 vorgesehenen Gewindes ein Gewinde in die das Loch umgebende wulstförmige Materialverdickung eingeschnitten.
Die gewindeschneidende Eigenschaft dieses ersten Bereiches 45 beruht dabei zum einen auf Kanten, die wegen der in diesem Bereich durch Abflachungen 46 gebildeten polygonalen Querschnittsform der Dünnblechschraube 41 an den Übergangsstellen zu den in diesem Bereich vorgesehenen Gewindegängen angeordnet sind, und zum anderen auf der schneidenden Wirkung der Abschnitte der Gewindegänge, die von den Abflachungen 46 nicht betroffen sind.
Am deutlichsten sind die Kanten in den Ecken des aus der Fig. 5a ersichtlichen Querschnitts Q1-Q1 durch die in Fig. 4 abgebildete Schraube ausgebildet. In dem in Fig. 5a gezeigten Querschnitt beruht die gewindeschneidende Wirkung der bekannten Schraube rein auf den in den Ecken angeordneten Kanten.
Wie der Querschnitt entlang der Linie Q2-Q2 in Fig. 5b verdeutlicht, sind derartige Kanten jedoch über den ganzen ersten Bereich 45 der Verjüngung polygonaler Querschnittsform am Übergang zwischen zwei Abflachungen 46 bzw. zwischen einer Abflachung 46 und einem angrenzenden Gewindegangabschnitt ausgebildet. In dem in Fig. 5b gezeigten Querschnitt beruht die gewindeschneidende Wirkung der bekannten Schraube somit zum einen auf der Schneidwirkung der Kanten und zum anderen auf der Schneidwirkung der Abschnitte des Gewindeganges, die von den Abflachungen 46 nicht betroffen sind.
Somit tritt beim Verschrauben der bekannten Dünnblechschraube insbesondere aufgrund der tangentialen Bewegung der Kanten entlang des zu formenden Gewindes ein hobelnder, materialabtragender Effekt auf, der eine wesentliche Ursache für die gewindeschneidende Wirkung der Schraube ist.

Aufgrund der feinen Zerspanung des Dünnblechmaterials während des Gewindeschneidens, die beim Verschrauben der bekannten Dünnblechschraube wegen der hobelnden Wirkung der Kanten hervorgerufen wird, ergeben sich verschiedene Nachteile:
Feine Metallspäne können sich im Inneren von Gehäusen und dergleichen absetzen, wo sie zum Beispiel im Falle elektrischer Geräte unerwünschte und gefährliche Kontaktbrücken bilden können. Außerdem lassen sich feine Späne schlecht entfernen und führen insbesondere im Falle des Zutritts von Feuchtigkeit bzw. feuchter Luft zu unerwünschter Korrosion.

Aus der Patentschrift GB 1,022,355 ist eine selbstschneidende Schraube bekannt. Die Schraube weist einen für einen Werkzeugangriff ausgebildeten Kopf und einen sich an den Kopf anschließenden zylindrischen Abschnitt auf. An den zylindrischen Abschnitt schließt sich ein sich verjüngender Abschnitt an. An dem sich verjüngenden Abschnitt und an dem zylindrischen Abschnitt der Schraube ist ein durchlaufendes Gewinde ausgebildet. Das an dem sich verjüngenden Abschnitt vorgesehene Gewinde weist einen lobularen Querschnitt auf und setzt sich somit aus Kreisbögen unterschiedlicher Radien zusammen. Durch die lobulare Ausgestaltung der Gewindegänge in dem sich verjüngenden Abschnitt soll ein Auftreten von Spänen während des Gewindeformens vermieden werden.

Ausgehend von dem bekannten Stand der Technik ist es Aufgabe der vorliegenden Erfindung, eine spanlos loch- und gewindeformende Schraube zur Verschraubung von Feinblechen geringer Dicke zur Verfügung zu stellen, bei der das Auftreten von Spänen zuverlässig vermieden wird.

Die Erfindung wird gemäß dem unabhängigen Anspruch 1 gelöst. Vorteilhafte Ausgestaltungen finden sich in den Unteransprüchen.

Eine spanlos loch- und gewindeformende Schraube zur Verschraubung in Feinblechen geringer Dicke weist einen Kopf, der für einen Werkzeugangriff ausgebildet ist, einen an den Kopf anschließenden, ein Schraubengewinde tragenden, im wesentlichen zylindrischen ersten Abschnitt, einen an den ersten Abschnitt anschließenden, sich konisch verjüngenden, gewindeformenden zweiten Abschnitt, und einen sich an den zweiten Abschnitt anschließenden, sich im wesentlichen konisch verjüngenden und eine Spitze bildenden dritten Abschnitt auf, wobei an dem ersten und zweiten Abschnitt der Schraube ein durchlaufendes erstes Gewinde konstanter Steigung ausgebildet ist, der zweite Abschnitt eine im wesentlichen polygonale Querschnittsform aufweist, und an dem dritten Abschnitt ein Bohrgewinde ausgebildet ist.
Dabei entspricht der Außenumfang der Außendurchmesser aller Gewindegänge des im zweiten Abschnitts der Schraube ausgebildeten Gewindes für jeden Gewindegang einem Polygonzug gleichen Aufbaus, wobei sich der Polygonzug ausschließlich aus Kreisbögen unterschiedlicher Radien zusammensetzt.
Unter Polygonzug gleichen Aufbaus wird dabei verstanden, dass der Polygonzug für jeden Gewindegang aus der gleichen Reihenfolge von Kreisbögen gebildet ist.

Zur Verbesserung des Bohrverhaltens der Schraube weist das im dritten Abschnitt der erfindungsgemäßen Schraube vorgesehene Bohrgewinde eine größere Steigung und eine größere Ganghöhe als das im ersten und zweiten Abschnitt vorgesehene erste Gewinde auf, da der Bohrvorgang so in Bezug auf maximale Materialverdrängung unter Vermeidung einer Materialabtragung optimiert werden kann.

Da erfindungsgemäß der Außenumfang der Außendurchmesser aller Gewindegänge des im zweiten Abschnitt ausgebildeten gewindeformenden Gewindes für jeden Gewindegang einem gleich aufgebauten Polygonzug entspricht, und sich dieser Polygonzug ausschließlich aus Kreisbögen unterschiedlicher Radien zusammensetzt, treten entlang der Gewindegänge des gewindeformenden Gewindes keine Kanten auf, die geeignet sind, während des Gewindeformens eine materialabtragende Wirkung zu entfalten.
Die gewindeformende Wirkung des zweiten Abschnitts beruht damit im wesentlichen auf einem Material verdrängenden Effekt, der bei Rotation der Schraube von dem in Form des Außenumfangs der Gewindegänge des zweiten Abschnitts der Schraube vorgesehenen Polygonzug hervorgerufen wird.
Somit wird bei der erfindungsgemäßen Schraube auch beim Gewindeformen ein materialabtragender, beispielsweise hobelnder Effekt und damit das Auftreten von Spänen wirkungsvoll vermieden.

In einer bevorzugten Ausführungsform weisen die den Polygonzug bildenden Kreisbögen abwechselnd größere und kleinere Radien auf. Vorzugsweise ist dabei ein großer Radius zwischen 4,5 und 40 mal so groß, wie die angrenzenden kleinen Radien. Dadurch ist es möglich, im wesentlichen poly-lobulare Außenumfänge der Außendurchmesser der Gewindegänge des gewindeformenden zweiten Abschnitts der Schraube zu realisieren.
Unter poly-lobulare Form wird dabei im Allgemeinen ein geschlossener, regelmäßiger Polygonzug verstanden, der sich ausschließlich aus Kreisbögen zusammensetzt und im wesentlichen die Form eines regelmäßigen Vielecks nachzeichnet. Dabei ist leicht einzusehen, daß der Außenumfang der Außendurchmesser der Gewindegänge der erfindungsgemäßen Schraube aufgrund der konischen Verjüngung im zweiten Abschnitt keine geschlossene Form bilden kann, sondern sich an eine poly-lobulare Form nur im wesentlichen annähern kann.
Durch den in Folge der im wesentlichen poly-lobularen Form im Verlauf eines Gewindeganges schwankenden Außenumfangs der Außendurchmesser kann die Reibungskraft während des Gewindeformens reduziert werden, da immer nur ein kleiner Abschnitt des gewindeformenden Gewindeganges mit maximaler Kraft gegen das zu verdrängende Material gedrückt wird.
Da diese Kraft in Abhängigkeit zu dem von dem Außenumfang der Außendurchmesser der Gewindegänge des zweiten Abschnitts gebildeten Polygonzug im Verlauf eines Gewindeganges alternierend gesteigert und verringert wird, kann der Verlauf der während dem Gewindeformen auftretenden Materialbelastung für die Schraube und das Feinblech optimiert werden.

Allgemein ist es vorteilhaft, wenn die den Polygonzug bildenden Kreisbögen Radien aufweisen, die dem 0,025 bis 0,1-fachen bzw. 0,35 bis 2,5-fachen des Gewindedurchmessers des jeweiligen Gewindeganges entsprechen.
Durch eine derartige Dimensionierung der Radien lässt sich eine optimale Materialverdrängung während des Gewindeformens erzielen.

In einem bevorzugten Ausführungsbeispiel der vorliegenden Erfindung setzt sich der Polygonzug für jeden Gewindegang aus der gleichen Reihenfolge von Kreisbögen zusammen, wobei die Radien sich entsprechender Kreisbögen der Polygonzüge verschiedener Gewindegänge proportional zum Außendurchmesser des jeweiligen Gewindeganges sind.

Vorzugsweise ist der Polygonzug so aus Kreisbögen verschiedener Radien gebildet, dass das Verhältnis der Radien von in Längsrichtung der Schraube benachbarten Kreisbögen verschiedener Gewindegänge für alle Kreisbögen gleich und proportional dem Verhältnis der Außendurchmesser der jeweiligen Gewindegänge ist.
Dadurch wird gewährleistet, dass sich entsprechende Radien von Kreisbögen des Polygonzuges verschiedener Gewindegänge in Erstreckungsrichtung der Schraube benachbart angeordnet sind. Somit weist der zweite Abschnitt insgesamt eine im wesentlichen poly-lobulare Form auf. Diese poly-lobulare Form des zweiten Abschnitts der erfindungsgemäßen Schraube bewirkt beim Gewindeformen eine vorteilhafte Selbstzentrierung der Schraube.

Vorzugsweise sind die Steigung und die Ganghöhe des im dritten Abschnitt der Schraube vorgesehenen Bohrgewindes nicht konstant.

Im folgenden wird ein bevorzugtes Ausführungsbeispiel der vorliegenden Erfindung anhand von Zeichnungen beschrieben. Dabei zeigt
- Fig. 1: eine Aufsicht auf eine erfindungsgemäße spanlos loch- und gewindeformende Schraube;
- Fig. 2: einen typischen Polygonzug, wie er gemäß der vorliegenden Erfindung entlang der Außendurchmesser aller Gewindegänge des im zweiten Abschnitts der Schraube ausgebildeten gewindeformenden Gewindes gleichermaßen vorgesehen ist;
- Fig. 3: einen vergrößerten Ausschnitt L eines erfindungsgemäßen Gewindeganges der in Fig. 1 gezeigten Schraube;
- Fig. 4: eine bekannte spanlos lochformende und gewindeschneidende Dünnblechschraube;
- Fig. 5: Querschnitte durch die in Fig. 4 gezeigte Dünnblechschraube entlang zweier Schnittlinien.

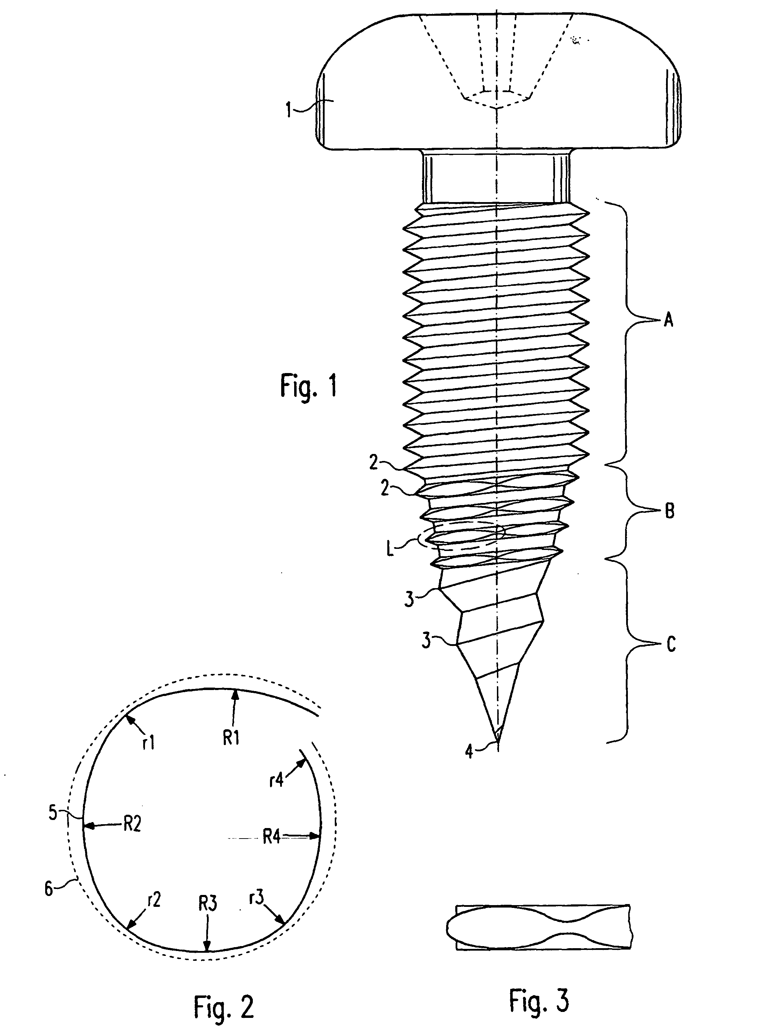

In Fig. 1 ist ein bevorzugtes Ausführungsbeispiel einer erfindungsgemäßen spanlos loch- und gewindeformenden Schraube dargestellt.

Die Schraube weist einen Kopf 1 auf, der für einen Werkzeugangriff ausgebildet ist. Beispielsweise ist der Kopf 1 so ausgebildet, daß er mit einem Schlitz- oder Kreuzschlitz-Schraubenzieher oder einem Imbusschlüssel in Eingriff kommen kann.

An den Kopf 1 schließt sich ein im wesentlichen zylindrischer erster Abschnitt A an, der das Schraubengewinde trägt. Das Schraubengewinde kann beispielsweise ein übliches metrisches Gewinde, Whitworth-Gewinde oder auch Sellers-Gewinde sein. Die Gewindegänge können links- oder rechtsgängig vorgesehen und als scharfgängiges Gewinde, Flach-Gewinde oder Trapez-Gewinde ausgebildet sein.
In dem gezeigten bevorzugten Ausführungsbeispiel weist die Schraube ein Schraubengewinde in Form eines rechtsgängigen, scharfgängigen Spitzgewindes mit im wesentlichen dreieckigem Querschnitt auf.

Der erste Abschnitt A geht in einen sich konisch verjüngenden, gewindeformenden zweiten Abschnitt B über. Der zweite Abschnitt B weist eine im wesentlichen polygonale Querschnittsform auf und trägt ein durchlaufend mit dem Schraubengewinde des ersten Abschnitts A ausgebildetes erstes Gewinde 2 konstanter Steigung.
Die im wesentlichen polygonale Querschnittsform des zweiten Abschnitts B beruht auf einem erfindungsgemäß auf einem dem Außenumfang der Außendurchmesser aller Gewindegänge des im zweiten Abschnitts B der Schraube ausgebildeten ersten Gewindes 2 entsprechenden Polygonzug 5. Der Polygonzug 5 setzt sich ausschließlich aus Kreisbögen unterschiedlicher Radien r1-r4, R1-R4 zusammen und weist für alle Gewindegänge des zweiten Abschnitts B den gleichen Aufbau auf. Unter gleichem Aufbau ist dabei zu verstehen, daß sich der Polygonzug 5 für jeden Gewindegang aus der gleichen Reihenfolge von Kreisbögen zusammensetzt.

Ein in dem in Fig. 1 gezeigten bevorzugten Ausführungsbeispiel einer erfindungsgemäßen Schraube für einen Gewindegang des zweiten Abschnitts B verwendeter Polygonzug 5 ist in Fig. 2 schematisch dargestellt. Dabei ist zusätzlich in gestrichelter Linie 6 der Verlauf eines konventionellen Gewindeganges gezeigt.
Der in Fig. 2 gezeigte Polygonzug entspricht im wesentlichen einer Aufsicht auf den Außenumfang des Außendurchmessers eines Gewindeganges in Erstreckungsrichtung der Schraube, und ist folglich der radial äußeren Umfangslinie eines Gewindeganges vergleichbar.
Wie deutlich zu erkennen ist, weisen die den Polygonzug 5 bildenden Kreisbögen abwechselnd größere R1-R4 und kleinere r1-r4 Radien auf. Dabei ist in dem gezeigten Ausführungsbeispiel ein großer Radius R1-R4 zwischen 4,5 und 40 mal so groß, wie die angrenzenden kleinen Radien r1-r4. Insgesamt ergeben sich in dem in Fig. 2 gezeigten Polygonzug 5 Radien, die dem 0,025 bis 0,1-fachen bzw. 0,35 bis 2,5-fachen des Gewindedurchmessers des jeweiligen Gewindeganges entsprechen.

Der in Fig. 2 beschriebene Polygonzug 5 erlaubt es, im wesentlichen poly-lobulare Außenumfänge der Außendurchmesser der Gewindegänge des gewindeformenden zweiten Abschnitts B der erfindungsgemäßen Schraube zu realisieren, wodurch die beim Gewindeformen auftretende Reibungskraft reduziert werden kann.
Dabei wird unter poly-lobularer Form im Allgemeinen ein geschlossener, regelmäßiger Polygonzug verstanden, der sich ausschließlich aus Kreisbögen zusammensetzt und im wesentlichen die Form eines regelmäßigen Vielecks nachzeichnet.
Wie aus Fig. 2 ersichtlich, kann der dem Außenumfang der Außendurchmesser der Gewindegänge der erfindungsgemäßen Schraube entsprechende Polygonzug 5 aufgrund der konischen Verjüngung im zweiten Abschnitt B keine geschlossene Form bilden, so daß er sich an eine poly-lobulare Form nur im wesentlichen annähern kann.

In einem bevorzugten Ausführungsbeispiel der vorliegenden Erfindung setzt sich der Polygonzug 5 für jeden Gewindegang aus der gleichen Reihenfolge von Kreisbögen zusammen, wobei die Radien sich entsprechender Kreisbögen der Polygonzüge verschiedener Gewindegänge proportional zum Außendurchmesser des jeweiligen Gewindeganges sind.

Wie Fig. 1 deutlich zeigt, ist der Polygonzug 5 so aus Kreisbögen verschiedener Radien R1-R4, r1-r4 gebildet, daß das Verhältnis der Radien von in Längsrichtung der Schraube benachbarten Kreisbögen verschiedener Gewindegänge für alle Kreisbögen gleich und proportional dem Verhältnis der Außendurchmesser der jeweiligen Gewindegänge ist, so daß sich entsprechende Radien von Kreisbögen des Polygonzuges 5 verschiedener Gewindegänge in Erstreckungsrichtung der Schraube benachbart angeordnet sind.
Insgesamt weist der zweite Abschnitt B des bevorzugten Ausführungsbeispieles somit eine im wesentlichen quadro-lobulare Form auf, die beim Gewindeformen eine vorteilhafte Selbstzentrierung der erfindungsgemäßen Schraube bewirkt.

Bei der oben beschriebenen erfindungsgemäßen Ausgestaltung der Gewindegänge des gewindeformenden Gewindes im zweiten Abschnitt B treten entlang der Gewindegänge keine Kanten auf, die geeignet sind, während des Gewindeformens eine materialabtragende Wirkung zu entfalten.
Dies wird insbesondere aus der in Fig. 3 gezeigten Vergrößerung eines Ausschnitts L eines Gewindeganges des gewindeformenden zweiten Abschnitts B deutlich.
Dabei weisen die Gewindegänge des zweiten Abschnitts B der in Fig. 1 gezeigten Schraube einen im wesentlichen trapezförmigen Querschnitt auf. Der Polygonzug 5 ist nur am Außenumfang der Außendurchmesser der Gewindegänge, nicht jedoch am Umfang der Innendurchmesser der Gewindegänge ausgebildet.
Wie aus Fig. 3 ersichtlich, weist die radial äußere Oberfläche eines jeden Gewindeganges deshalb über die ganze Länge des Polygonzuges 5 alternierend Verjüngungen und Verbreiterungen auf. Für die radial äußere Oberfläche der Gewindegänge ergibt sich damit eine Form, die einer Fläche entspricht, welche zwischen zwei in Erstreckungsrichtung der Schraube beabstandeten, parallel angeordneten, gegenläufigen Wellenlinien aufgespannt wird.
Die Innendurchmesser der Gewindegänge, die auch Kerndurchmesser genannt werden, verjüngen sich im Bereich des Abschnittes B lediglich entsprechend der Konizität des Abschnittes B zu einem dem Kopf der Schraube abgewandten Ende hin. Somit beeinflußt der Polygonzug 5 im Hinblick auf die Querschnittsform des Gewindes vor allem die Gangtiefe des Gewindes, d. h. die Differenz zwischen dem jeweiligen Außendurchmesser und Innendurchmesser.

Die gewindeformende Wirkung der erfindungsgemäßen Schraube beruht somit rein auf einer Verdrängung von Material, die bei Rotation der Schraube durch die einem Polygonzug 5 entsprechende Ausbildung des Außenumfangs der Außendurchmesser aller Gewindegänge des zweiten Abschnitts B bewirkt wird.

Folglich wird mit der erfindungsgemäßen Schraube das Auftreten von Spänen wirkungsvoll vermieden.

Vorzugsweise wird das Gewinde während des Gewindeformens so ausgebildet, daß die erfindungsgemäße spanlos loch- und gewindeformende Schraube zu einem späteren Zeitpunkt (beispielsweise bei Reparaturarbeiten) durch eine konventionelle Schraube ersetzt werden kann.

Wie in Fig. 1 weiter gezeigt, schließt sich an den zweiten Abschnitt B ein sich im wesentlichen konisch verjüngender und eine Spitze 4 bildender dritter Abschnitt C an, der ein Bohrgewinde 3 aufweist.
Das im dritten Abschnitt C vorgesehene Bohrgewinde 3 weist zur Verbesserung des Bohrverhaltens der erfindungsgemäßen Schraube eine größere Steigung und eine größere Ganghöhe als das im ersten und zweiten Abschnitt A, B ausgebildete Gewinde 2 auf.
Dabei sind die Steigung und die Ganghöhe des Bohrgewindes 3 bei der in Fig. 1 gezeigten Schraube nicht konstant.
Während des Bohrvorganges kann aufgrund der individuellen Anpassung des Bohrgewindes 3 eine maximale Materialverdrängung ohne Materialabtragung gewährleistet, und somit das Auftreten von Spänen vermieden werden.

## Patentansprüche

1. Spanlos loch- und gewindeformende Schraube zur Verschraubung in Feinblechen geringer Dicke, aufweisend
- einen Kopf (1), der für einen Werkzeugangriff ausgebildet ist,
- einen an den Kopf (1) anschließenden, ein Schraubengewinde tragenden, im wesentlichen zylindrischen ersten Abschnitt (A),
- einen an den ersten Abschnitt (A) anschließenden, sich konisch verjüngenden, gewindeformenden zweiten Abschnitt (B), und
- einen sich an den zweiten Abschnitt (B) anschließenden, sich im wesentlichen konisch verjüngenden und eine Spitze (4) bildenden dritten Abschnitt (C),
wobei
an dem ersten und zweiten Abschnitt (A, B) der Schraube ein durchlaufendes erstes Gewinde (2) konstanter Steigung ausgebildet ist, bei dem der Außenumfang der Außendurchmesser aller Gewindegänge für jeden Gewindegang einem Polygonzug (5) gleichen Aufbaus entspricht, wobei sich der Polygonzug (5) ausschließlich aus Kreisbögen unterschiedlicher Radien (r1-r4, R1-R4) zusammensetzt, und
der zweite Abschnitt (B) eine im wesentlichen polygonale Querschnittsform aufweist,
**dadurch gekennzeichnet**,
an dem dritten Abschnitt (C) der Schraube ein Bohrgewinde (3) ausgebildet ist, und
dass das im dritten Abschnitt (C) vorgesehene Bohrgewinde (3) eine größer Steigung und eine größere Ganghöhe als das an dem ersten und zweiten Abschnitt (A, B) der Schraube ausgebildete erste Gewinde (2) aufweist.

2. Schraube nach Anspruch 1,
**dadurch gekennzeichnet,**
**dass** die den Polygonzug (5) bildenden Kreisbögen abwechselnd größere und kleinere Radien (r1-r4, R1-R4) aufweisen.

3. Schraube nach Anspruch 2,
**dadurch gekennzeichnet,**
**dass** ein großer Radius (R1-R4) zwischen 4,5 und 40 mal so groß ist, wie die angrenzenden kleineren Radien (r1-r4).

4. Schraube nach einem der vorangegangenen Ansprüche,
**dadurch gekennzeichnet,**
**dass** die Kreisbögen Radien (r1-r4, R1-R4) aufweisen, die dem 0,025 bis 0,1-fachen bzw. 0,35 bis 2,5-fachen des Gewindedurchmessers des jeweiligen Gewindeganges entsprechen.

5. Schraube nach einem der vorangegangenen Ansprüche,
**dadurch gekennzeichnet,**
**dass** sich der Polygonzug (5) für jeden Gewindegang aus der gleichen Reihenfolge von Kreisbögen zusammensetzt, wobei die Radien (r1-r4, R1-R4) sich entsprechender Kreisbögen der Polygonzüge (5) verschiedener Gewindegänge proportional zum Außendurchmesser des jeweiligen Gewindeganges sind.

6. Schraube nach einem der vorangegangenen Ansprüche,
**dadurch gekennzeichnet,**
**dass** der Polygonzug (5) so aus Kreisbögen verschiedener Radien (r1-r4, R1-R4) gebildet ist, dass das Verhältnis der Radien (r1-r4, R1-R4) von in Längsrichtung der Schraube benachbarten Kreisbögen verschiedener Gewindegänge für alle Kreisbögen gleich und proportional dem Verhältnis der Außendurchmesser der jeweiligen Gewindegänge ist.

7. Schraube nach einem der vorangegangenen Ansprüche,
**dadurch gekennzeichnet,**
**dass** die Gewindegänge im zweiten Abschnitt (B) der Schraube über den ganzen Polygonzug (5) einen trapezförmigen Querschnitt aufweisen.

8. Schraube nach Anspruch 7,
**dadurch gekennzeichnet,**
**dass** der Polygonzug (5) die Gangtiefe des Gewindes, d. h. die Differenz zwischen dem jeweiligen Außendurchmesser und Innendurchmesser eines jeweiligen Gewindeganges, bestimmt.

9. Schraube nach einem der vorangegangenen Ansprüche,
**dadurch gekennzeichnet,**
**dass** die Steigung und die Ganghöhe des Bohrgewindes (3) nicht konstant sind.

## Claims

1. Screw which forms a hole and thread in a swarf-less manner, for screwing into light-gauge metal sheets of low thickness, the said screw having
- a head (1) constructed for the application of a tool,
- a substantially cylindrical first section (A) adjoining the head (1) and carrying a screw thread,
- a conically tapering, thread-forming second section (B) adjoining the first section (A), and
- a third section (C) adjoining the second section (B), tapering in a substantially conical manner and forming a point (4);
wherein
there is constructed, on the first and second sections (A, B) of the screw, a continuous first. thread (2) of constant pitch, in which the outer periphery of the outer diameters of all the thread courses corresponds, for each thread course, to a polygonal course (5) of the same composition, said polygonal course (5) being composed exclusively of circular arcs of differing radii (r1-r4, R1-R4); and
the second section (B) has a substantially polygonal cross-sectional shape,
**characterised in that**
a boring thread (3) is constructed on the third section (C) of the screw, and that
said boring thread (3) provided in the third section (C) has a larger pitch and a larger course height than the first thread (2) constructed on the first and second sections (A, B) of the screw.

2. Screw according to claim 1,
**characterised in that**
the circular arcs forming the polygonal course (5) have alternately larger and smaller radii (r1-r4, R1-R4).

3. Screw according to claim 2,
**characterised in that**
a large radius (R1-R4) is between 4.5 and 40 times as large as the adjacent smaller radii (r1-r4).

4. Screw according to one of the preceding claims,
**characterised in that**
the circular arcs have radii (r1-r4, R1-R4) which respectively correspond to 0.025 to 0.1 times and 0.35 to 2.5 times the thread diameter of the particular thread course.

5. Screw according to one of the preceding claims,
**characterised in that**
the polygonal course (5) for each thread course is composed of the same sequence of circular arcs, the radii (r1-r4, R1-R4) of mutually corresponding circular arcs of the polygonal courses (5) of different thread courses being proportional to the outer diameter of the particular thread course.

6. Screw according to one of the preceding claims,
**characterised in that**
the polygonal course (5) is formed from circular arcs of different radii (r1-r4, R1-R4) in such a way that the ratio of the radii (r1-r4, R1-R4) of circular arcs, which are adjacent in the longitudinal direction of the screw, of different thread courses is the same for all the circular arcs and proportional to the ratio of the outer diameters of the particular thread courses.

7. Screw according to one of the preceding claims,
**characterised in that**
the thread courses in the second section (B) of the screw have a trapezoidal cross-section over the entire polygonal course (5).

8. Screw according to claim 7,
**characterised in that**
the polygonal course (5) determines the course depth of the thread, that is to say the difference between the particular outer diameter and inner diameter of a particular thread course.

9. Screw according to one of the preceding claims,
**characterised in that**
the pitch and the course height of the boring thread (3) are not constant.

## Revendications

1. Vis auto-taraudeuse sans enlèvement de copeaux, à visser dans des tôles minces de faible épaisseur, comportant
- une tête (1) qui est conçue pour une prise d'outil,
- un premier segment (A) sensiblement cylindrique, raccordé à la tête (1) et portant un filet de vis,
- un deuxième segment (B) de taraudage, raccordé au premier segment (A) et s'amincissant en forme de cône, et
- un troisième segment (C), raccordé au deuxième segment (B), s'amincissant sensiblement en forme de cône et formant une pointe (4),
un premier filet continu (2) avec un pas constant, dans lequel le pourtour extérieur des diamètres extérieurs de toutes les spires pour chaque spire correspond à un tracé polygonal (5) de même structure, étant formé dans le premier et le deuxième segment (A, B) de la vis, le tracé polygonal (5) étant exclusivement constitué d'arcs de cercle de rayons différents (r1-r4, R1-R4), et le deuxième segment (B) ayant une forme de section transversale sensiblement polygonale,
**caractérisée en ce que**
un filet de perçage (3) est formé dans le troisième segment (C) de la vis, et **en ce que** le filet de perçage (3) prévu dans le troisième segment (C) présente une pente plus grande et un pas plus grand que le premier filet (2) formé sur le premier et le deuxième segment (A, B) de la vis.

2. Vis selon la revendication 1, **caractérisée en ce que** les arcs de cercle formant le tracé polygonal (5) présentent alternativement des rayons plus grands et plus petits (r1-r4, R1-R4).

3. Vis selon la revendication 2, **caractérisée en ce qu'**un rayon plus grand (R1-R4) est entre 4,5 et 40 plus grand les rayons adjacents plus petits (r1-r4).

4. Vis selon l'une quelconque des revendications précédentes, **caractérisée en ce que** les arcs de cercle présentent des rayons (r1-r4, R1-R4) qui correspondent à 0,025 à 0,1 fois ou 0,35 à 2,5 fois le diamètre du filetage de la spire concernée.

5. Vis selon l'une quelconque des revendications précédentes, **caractérisée en ce que** le tracé polygonal (5) est constitué pour chaque spire de la même succession d'arcs de cercle, les rayons (r1-r4, R1-R4) d'arcs de cercle se correspondant du tracé polygonal (5) de spires différentes étant proportionnels au diamètre extérieur de la spire concernée.

6. Vis selon l'une quelconque des revendications précédentes, **caractérisée en ce que** le tracé polygonal (5) est formé d'arcs de cercle ayant des rayons différents (r1-r4, R1-R4) de telle manière que le rapport des rayons (r1-r4, R1-R4) des arcs de cercle de spires différentes adjacents dans la direction longitudinale de la vis soit le même pour tous les arcs de cercle et soit proportionnel au rapport des diamètres extérieurs des spires concernées.

7. Vis selon l'une quelconque des revendications précédentes, **caractérisée en ce que** les spires dans le deuxième segment (B) de la vis présentent une section transversale trapézoïdale sur tout le tracé polygonal (5).

8. Vis selon la revendication 7, **caractérisée en ce que** le tracé polygonal (5) détermine la profondeur de pas du filet, c'est-à-dire la différence entre le diamètre extérieur et le diamètre intérieur d'une spire.

9. Vis selon l'une quelconque des revendications précédentes, **caractérisée en ce que** la pente et le pas du filet de perçage (3) ne sont pas constants.
